# EUROPÄISCHE PATENTSCHRIFT

(11) **EP 1 884 350 B1**
(45) Veröffentlichungstag und Bekanntmachung des Hinweises auf die Patenterteilung: **29.07.2009**
(21) Anmeldenummer: 07007028.9
(22) Anmeldetag: 04.04.2007
(51) Int. Cl.: B29C 65/82, B65B 57/00, G01N 21/00

(54) **Verfahren zur Prüfung des Siegelergebnisses bei der Siegelung von Folien in einer Siegelstation einer Thermoformmaschine**
Method for testing the seal results of sealing films in a sealing station of a thermoforming machine
Procédé de vérification du résultat de scellage lors du scellage de feuilles dans un poste de scellage d'une machine de thermoformage

(30) Priorität: 05.08.2006 DE 102006036723
(43) Veröffentlichungstag der Anmeldung: 06.02.2008
(73) Patentinhaber: UHLMANN PAC-SYSTEME GmbH & Co. KG, 88471 Laupheim (DE)
(72) Erfinder: Felk, Günter, 89079 Ulm-Einsingen (DE); Riekenbrauck, Jörg, 88477 Schwendi (DE); Bongers, Hans-Werner, 88471 Laupheim (DE)
(74) Vertreter: Wächter, Jochen

(56) Entgegenhaltungen:
- JP-A- 6 027 045
- JP-A- 10 267 865

## Beschreibung

Die Erfindung betrifft ein Verfahren zur Prüfung des Siegelergebnisses bei der Siegelung von Folien in einer Siegelstation einer Thermoformmaschine, insbesondere bei der Verpackung pharmazeutischer Produkte, bei der Folien zwischen zwei Siegelwerkzeugen geführt sind, von denen zumindest eines auf der den Folien zugewandten Seite eine Mehrzahl Riffel mit sich von der Basis in Richtung Spitze verjüngender Gestalt aufweist, die bei Ausführen des Siegelvorgangs in den aus den Folien bestehenden Folienverband eintauchen und auf der Oberfläche des Folienverbands jeweils einen bleibenden Eindruck mit einer Eintauchtiefe "s" des einzelnen Riffels hinterlassen.

In der pharmazeutischen Herstellung spielt die Qualitätssicherung eine zentrale Rolle, da hier Qualitätsabweichungen direkte Auswirkungen auf die Gesundheit der Verbraucher haben können. Die Verpackung von Arzneimittelprodukten erfolgt hierbei gemäß den hohen Anforderungen, die in den verbindlichen Richtlinien der europäischen Kommission, der Pharmaceutical Inspection Convention (PIC), durch die US-amerikanische FDA, u.a., erstellt worden sind.

Bei der Herstellung von Blisterpackungen kommt in diesem Zusammenhang der Dichtigkeit der die verwendeten Folien verbindenden Siegelnaht hinsichtlich einer möglichen Kontamination des Arzneimittels durch Migration oder Permeation eine entscheidende Bedeutung zu. Hierbei hat sich gezeigt, dass die Eindringtiefe der üblicherweise auf den Siegelwerkzeugen angeordneten Riffel in den Folienverband, sowie die sich hieraus ergebende Kompensation von Toleranzen des Siegelwerkzeugs und der verwendeten Folien eine entscheidende Einflußgröße hinsichtlich der Siegelgüte darstellt. Bisherige Kontrollmethoden im Siegelungsprozess beschränken sich auf die Messung der bei der Siegelung aufgebrachten Siegelkraft oder auf die Messung des Abschmelzgrades der Folien im Bereich der Siegelfläche. Auch optische Kontrollmethoden sind bekannt, siehe hierzu beispielsweise JP 10 267 865.

Der mit diesen Kontrollmethoden verbundene Nachteil besteht darin, dass sie keine hundertprozentige Dichtigkeit der Siegelung garantieren, da sie auf indirekten Meßmethoden beruhen, die keine Aussage über das tatsächliche Siegelergebnis, insbesondere die Qualität des einzelnen Riffeleindrucks in dem Folienverband, zulassen.

Es ist daher Aufgabe der Erfindung, ein Verfahren der eingangs genannten Art zur Verfügung zu stellen, das eine direkte Überprüfung des Siegelergebnisses im Betrieb in Echtzeit ermöglicht.

Diese Aufgabe wird bei einem Verfahren der eingangs genannten Art dadurch gelöst, dass an dem durch die Siegelstation laufenden Folienverband die Erstreckung zumindest eines geometrischen Merkmals des Riffeleindrucks auf der Ebene der Oberfläche des Folienverbands erfasst wird. Der hiermit verbundene Vorteil besteht darin, dass die für die Siegelgüte maßgebliche Eintauchtiefe "s", durch die der Grad des Ausgleichs der Toleranzen des Siegelwerkzeugs und der Folien bestimmt wird, anhand eines von dieser direkt abhängigen Parameters auf einfache Weise bestimmt wird. Hierzu bedarf es keiner Unterbrechung des Siegelvorgangs und die Messung kann sich auf alle Riffel einer Siegelnaht erstrecken, so dass hierdurch eine lückenlose Qualitätskontrolle und somit eine weiter gesteigerte Prozesssicherheit gegeben ist.

Im Rahmen der Erfindung ist es besonders bevorzugt, dass die Erfassung zumindest einer Kante des Riffeleindrucks erfolgt. Der hiermit verbundene Vorteil besteht darin, dass in Abhängigkeit von der Riffelgeometrie, die pyramidenförmig, halbkugelförmig oder kegelförmig sein kann, die Länge, respektive die Umfangslänge oder aber der durch eine kreisförmige Kante gegebene Durchmesser zur Bestimmung der Eintauchtiefe "s" des einzelnen Riffels herangezogen werden kann.

Im Rahmen der Erfindung ist weiterhin vorgesehen, dass die Erfassung auf optischem Weg erfolgt. Dies ermöglicht zum einen ein berührungsfreies und überdies störunanfälliges Messverfahren. Zudem kann, bei entsprechend hoher zeitlicher Auflösung,eine von der Vorschubgeschwindigkeit des Folienverbandes unabhängige messtechnische Erfassung einer Kante an jedem einzelnen Riffeleindruck erfolgen. Dies stellt eine optimale Qualitätssicherung der gesamten Siegelfläche dar.

Zur zeitgleichen Erfassung der Kanten einer Mehrzahl von Riffeleindrücken ist es von ganz besonderem Vorteil, dass die Erfassung mittels einer Kamera mit einem Bildsensor erfolgt.

Um eine schlechte Siegelqualität durch ein nur unzureichendes Eindringen der Riffel in den Folienverband zur vermeiden, ist es von besonderem Vorteil, dass die abgeleitete bzw. ermittelte Eindringtiefe der Riffel in den Folienverband als Regelgröße bei der Regelung des Siegelprozesses verwendet wird. Hierdurch kann mittels geeigneter Stellglieder eine Anpassung der Siegelstation während des Betriebs erfolgen und somit die Prozesssicherheit erhöht sowie die ausschußbedingten Folgekosten vermindert werden.

Im folgenden wird die Erfindung an einem in der Zeichnung dargestellten Ausführungsbeispiel näher erläutert; es zeigen:
- Fig. 1: eine perspektivische Draufsicht auf einen Ausschnitt der riffelbesetzten Siegelwerkzeugoberfläche,
- Fig. 2: einen Querschnitt durch einen der Figur 1 entsprechenden Ausschnitt zweier Siegelwerkzeuge bei Siegelung eines Folienverbandes mit geringer Eintauchtiefe "s" der Riffel,
- Fig. 3: einen der Figur 2 entsprechenden Querschnitt bei größerer Eindringtiefe s der Riffel,

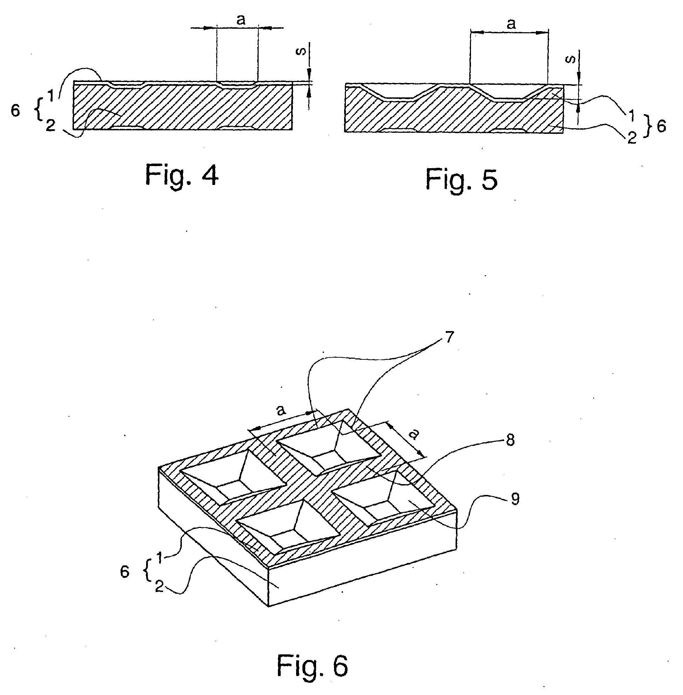

- Fig. 4: einen Querschnitt durch den der Figur 2 entsprechenden Folienverband nach Siegelung,
- Fig. 5: einen Querschnitt durch den der Figur 3 entsprechenden Folienverband nach Siegelung, und
- Fig. 6: eine perspektivische Draufsicht auf einen Ausschnitt des gesiegelten Folienverbands.

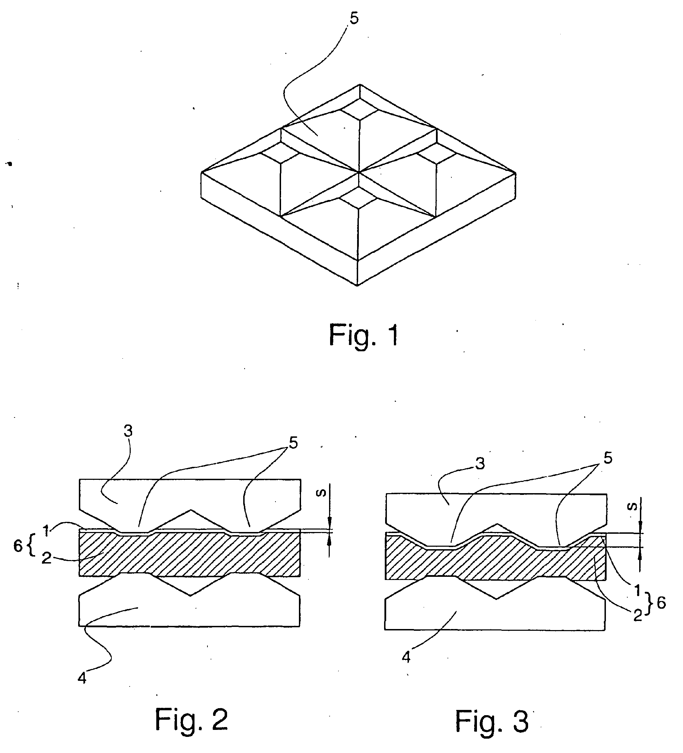

Bei dem Verfahren zur Prüfung des Siegelergebnisses bei der Siegelung von Folien 1, 2 in einer Siegelstation einer Thermoformmaschine, insbesondere bei der Verpackung pharmazeutischer Produkte, sind Folien 1, 2 zwischen zwei Siegelwerkzeugen 3, 4 geführt, von denen in den hier dargestellten Ausführungsbeispiel beide Siegelwerkzeuge 3, 4 auf der den Folien 1, 2 zugewandten Seite eine Mehrzahl Riffel 5 aufweisen. Diese Riffel 5 zeichnen sich durch eine sich von der Basis in Richtung Spitze verjüngende pyramidenstumpfförmige Gestalt aus, die bei Ausführung des Siegelvorgangs in den aus den Folien 1, 2 bestehenden Folienverband 6 gemäß den Figuren 2 und 3 eintauchen und auf der Oberfläche 8 des Folienverbands 6 jeweils einen bleibenden Eindruck mit einer von der Eintauchtiefe "s" des einzelnen Riffels 5 abhängigen Geometrie der Kanten 7 zwischen der Oberfläche 8 des Folienverbands 6 und der Oberfläche des Eindrucks 9 hinterlassen. Die jeweilige Erstreckung "a" der Kanten 7 des Riffeleindrucks 9 wird mittels einer in den Zeichnungen nicht näher dargestellten und oberhalb der Oberfläche 8 des Folienverbands 6 angeordneten Kamera mit Bildsensor auf optischem Wege erfasst und die Meßdaten einer ebenfalls nicht näher dargestellten Auswerteeinheit zugeführt. Eine alternative Erfassung einer die Eckpunkte des Riffeleindrucks 9 verbindenen Diagonalen zur Bestimmung der Eintauchtiefe "s" der Riffel 5 ist leicht vorstellbar. In der Auswerteinheit erfolgt die Erfassung bzw. Berechnung der Kantenlänge "a" sowie die Ableitung der mit der Kantenlänge "a" korrelierenden Eintauchtiefe "s". Die ermittelte Eintauchtiefe "s" der Riffel 5 in den Folienverband 6 wird als Regelgröße bei der Regelung des Siegelprozesses verwendet, so dass bei zu geringer Eintauchtiefe "s" der Riffel 5 eine entsprechende Erhöhung der Eintauchtiefe der Riffel 5 in den Folienverband 6 erfolgt.

## Patentansprüche

1. Verfahren zur Prüfung des Siegelergebnisses bei der Siegelung von Folien (1, 2) in einer Siegelstation einer Thermoformmaschine, insbesondere bei der Verpackung pharmazeutischer Produkte, bei der Folien (1, 2) zwischen zwei Siegelwerkzeugen (3, 4) geführt sind, von denen zumindest eines auf der den Folien (1 2) zugewandten Seite eine Mehrzahl Riffel (5) mit sich von der Basis in Richtung Spitze verjüngender Gestalt aufweist, die bei Ausführen des Siegelvorgangs in den aus den Folien (1, 2) bestehenden Folienverband (6) eintauchen und auf der Oberfläche (8) des Folienverbandes (6) jeweils einen bleibenden Eindruck mit einer Eintauchtiefe (s) des einzelnen Riffels (5) hinterlassen, **dadurch gekennzeichnet, dass** an dem durch die Siegelstation laufenden Folienverband (6) die Erstreckung zumindest eines geometrischen Merkmals des Riffeleindrucks (9) auf der Ebene der Oberfläche (8) des Folienverbands (6) erfasst und hierzu die Eintauchtiefe (s) bestimmt wird.

2. Verfahren nach Anspruch 1, **dadurch gekennzeichnet, dass** die Erfassung zumindest einer Kante (7) des Riffeleindrucks (9) erfolgt.

3. Verfahren nach Anspruch 2, **dadurch gekennzeichnet, dass** die Erfassung auf optischem Wege erfolgt.

4. Verfahren nach Anspruch 3, **dadurch gekennzeichnet, dass** die Erfassung mittels einer Kamera mit einem Bildsensor erfolgt.

5. Verfahren nach den Ansprüchen 1 bis 4, **dadurch gekennzeichnet, dass** die ermittelte Eindringtiefe (s) der Riffel (5) in den Folienverband (6) als Regelgröße bei der Regelung des Siegelprozesses verwendet wird.

## Claims

1. Method for testing the sealing result when sealing films (1, 2) in a sealing station of a thermoforming machine, in particular when packaging pharmaceutical products in which films (1, 2) are guided between two sealing tools (3, 4), at least one of which comprises, on the side facing towards the films (1, 2), a plurality of ribs (5) with a configuration which tapers away from the base in the direction of the tip, which ribs protrude into the film formation (6) consisting of the films (1, 2) when the sealing process is carried out and each leave behind on the surface (8) of the film formation (6) a permanent impression with the protrusion depth (s) of the individual rib (5), **characterised in that** on the film formation (6) passing through the sealing station, the extent of at least one geometric feature of the rib impression (9) on the plane of the surface (8) of the film formation (6) is detected and the protrusion depth (s) is determined for this purpose.

2. Method according to claim in 1, **characterised in that** at least one edge (7) of the rib impression (9) is detected.

3. Method according to claim 2, **characterised in that** the detection is performed optically.

4. Method according to claim 3, **characterised in that** the detection is performed by means of a camera with an image sensor.

5. Method according to claims 1 to 4, **characterised in that** the detected penetration depth (s) of the rib (5) into the film formation (6) is used as a control quantity for controlling the sealing process.

## Revendications

1. Procédé de vérification du résultat de scellage lors du scellage de feuilles (1, 2) dans un poste de scellage d'une machine de thermoformage, en particulier lors de l'emballage de produits pharmaceutiques, dans lequel des feuilles (1, 2) sont guidées entre deux outils de scellage (3, 4), dont l'un au moins présente sur le côté tourné vers les feuilles (1, 2) une pluralité de cannelures (5) avec une configuration se rétrécissant de la base en direction de la pointe, lesquelles cannelures plongent, lors de l'exécution de l'opération de scellage, dans l'assemblage de feuilles (6) constitué des feuilles (1, 2) et laissent respectivement, sur la surface (8) de l'assemblage de feuilles (6), une impression durable avec une profondeur de pénétration (s) de la cannelure individuelle (5), **caractérisé en ce que**, sur l'assemblage de feuilles (6) défilant au travers du poste de scellage, l'extension d'au moins une caractéristique géométrique de l'impression de cannelures (9) sur le plan de la surface (8) de l'assemblage de feuilles (6) est détectée et la profondeur de pénétration (s) est alors déterminée.

2. Procédé suivant la revendication 1, **caractérisé par** la détection d'au moins une arête (7) de l'impression de cannelures (9).

3. Procédé suivant la revendication 2, **caractérisé en ce que** la détection s'effectue par voie optique.

4. Procédé suivant la revendication 3, **caractérisé en ce que** la détection s'effectue au moyen d'une caméra avec un détecteur d'image.

5. Procédé suivant l'une des revendications 1 à 4, **caractérisé en ce que** la profondeur de pénétration (s) déterminée des cannelures (5) dans l'assemblage de feuilles (6) est utilisée en tant que grandeur réglée lors du réglage du processus de scellage.
